(19)

Europäisches
Patentamt
European
Patent Office
Office européen
des brevets

(11) **EP 1 793 243 A1**

(12) **EUROPÄISCHE PATENTANMELDUNG**

(43) Veröffentlichungstag:
**06.06.2007 Patentblatt 2007/23**

(51) Int Cl.:
***G01S 17/36*** (2006.01)     ***G01S 13/38*** (2006.01)

(21) Anmeldenummer: **05111695.2**

(22) Anmeldetag: **05.12.2005**

(84) Benannte Vertragsstaaten:
**AT BE BG CH CY CZ DE DK EE ES FI FR GB GR
HU IE IS IT LI LT LU LV MC NL PL PT RO SE SI
SK TR**
Benannte Erstreckungsstaaten:
**AL BA HR MK YU**

(71) Anmelder: **Leica Geosystems AG**
**9435 Heerbrugg (CH)**

(72) Erfinder: **Seeger, Stephan**
**9435 Heerbrugg (CH)**

(74) Vertreter: **Büchel, Kaminski & Partner**
**Patentanwälte Est.**
**Austrasse 79**
**9490 Vaduz (LI)**

(54) **Verfahren zur Auflösung einer Phasenmehrdeutigkeit**

(57) Zur Ableitung von Entfernungsinformationen nach dem Phasenmessprinzip wird ein periodisches Signal mit wenigstens zwei, insbesondere aufmodulierten, Wellenlängen $\lambda_1$ und $\lambda_2$ auf ein- oder mehrere Ziele (3') ausgesendet, deren Reflexionen wieder empfangen sowie die zugehörigen Phasen $\varphi_1$ und $\varphi_2$ ermittelt. Zur Auflösung von Phasenmehrdeutigkeiten wird ein Mehrdeutigkeitsintervall, in dem sich wenigstens ein Zielobjekt befindet, in Zellen (5) definierter Breite aufgeteilt, wobei jeder Zelle (5) ein Zählerstand und eine Distanz zugeordnet werden. Für die Zellen (5), welche einer möglichen Zieldistanz zugeordnet sind, erfolgt ein Inkrementieren des Zählerstands, wobei das Inkrementieren für eine Periodizitätslaufvariable und für alle Phasen erfolgt. Aus der Verteilung der Zählerstände wird eine Absolutphase oder eine wahre Zieldistanz zu wenigstens einem Zielobjekt (3') bestimmt.

*Fig. 2*

**EP 1 793 243 A1**

EP 1 793 243 A1

**Beschreibung**

Die Erfindung betrifft ein Verfahren zur Auflösung einer Phasenmehrdeutigkeit nach dem Oberbegriff des Anspruchs 1 ein Computerprogrammprodukt sowie einen Distanzmesser nach dem Oberbegriff des Anspruchs 17.

Im Bereich der berührungslosen Distanzmessung sind verschiedene Messprinzipien und -verfahren bekannt, die beispielsweise in den Fachbüchern "J. M. Rüeger: Electronic Distance Measurement, 4th Edition; Springer, Berlin, 1996" und "R. Joeckel & M. Stober: Elektronische Entfernungs- und Richtungsmessung, 4. Auflage; Verlag Konrad Wittwer, Stuttgart, 1999" dargestellt sind. Handelsübliche elektrooptische Distanzmessgeräte arbeiten vornehmlich nach dem Prinzip der Phasenmessung oder dem der Impuls-Laufzeitmessung; siehe z.B. Joeckel & Stober, Kapitel 13.

Die Arbeitsweise dieser Geräte besteht darin, modulierte elektromagnetische Strahlung, z.B. intensitätsmoduliertes Licht, auf die zu vermessenden Ziele auszusenden und nachfolgend ein oder mehrere Echos von den rückstreuenden Objekten, bei denen es sich idealerweise ausschliesslich um die zu vermessenden Ziele handelt, zu empfangen. Die Signalauswertung der empfangenen Echos ist eine technische Standardaufgabe, für die eine Vielzahl von Lösungen, insbesondere auch unter Verwendung von optischen Systemen, realisiert wurde.

Phasenmessende Systeme müssen das Problem der Phasenmehrdeutigkeit lösen. Die von einem Phasenmesser gemessene Phase bzw. Phasenverschiebung ist nicht eindeutig, da Distanzen, die sich um ganzzahlige Vielfache der Wellenlänge unterscheiden, zur Messung einer identischen Phase führen. Zur Auflösung der Phasenmehrdeutigkeit werden zumeist mehrere Messungen mit unterschiedlichen Trägerwellenlängen verwendet. Aus den gemessenen Phasenverschiebungen wird dann die Entfernung bestimmt.

Für viele Anwendungen, insbesondere in Geodäsie und Bauindustrie, haben sich in den letzten Jahren immer mehr Tachymeter oder andere Geräte durchgesetzt, die mit reflektorlos messenden Distanzmessern nach dem Phasenmessprinzip ausgerüstet sind.

Die reflektorlose Distanzmessung führt oft zu Situationen, in denen der vom Entfernungsmesser emittierte Messstrahl gleichzeitig mehrere Objekte anstrahlt. Das passiert z.B. bei der Vermessung einer Kante; wird sie angemessen, so trifft ein Teil des Strahls das Objekt mit der Kante, während ein anderer Teil des Strahls ein dahinter liegendes Objekt oder den Boden beleuchtet. Ein weiteres Beispiel ist ein Retroreflektor, der sich in der Nähe eines schwach reflektierenden Zielobjektes befindet und Streulicht in den Empfänger des Distanzmessers leitet. Ähnliches passiert, wenn unbeabsichtigt und oft auch unbemerkt Objekte zwischen dem eigentlichen Messobjekt und dem Instrument angestrahlt werden, beispielsweise bei Distanzmessungen durch Fensterscheiben, Baumgeäst oder Drahtzäune hindurch.

In derartigen Mehrfachziel-Situationen liefert ein herkömmlicher Phasenmesser, der eine einzige Distanz ausgibt, zumeist eine Falschmessung, d.h. einen Distanzmesswert, der mit einem Fehler behaftet ist, der weit ausserhalb der spezifizierten Messgenauigkeit liegt.

Laufzeitmesser können Mehrfachziel-Situationen leichter erkennen und handhaben, sofern die Ziele so weit voneinander entfernt sind bzw. die Sendeimpulse kurzzeitig genug sind, dass deren Echos detektiert und auseinandergehalten werden können.

Trotz der Vorteile von Laufzeitmessern sind die meisten gebräuchlichen Tachymeter mit Phasenmessern ausgerüstet, weil sie nur so die geforderte Distanzmessgenauigkeit im mm- oder gar Sub-mm-Bereich mit einem für feldtaugliche Anwendungen vertretbarem Aufwand erreichen können. Die Zuverlässigkeit dieser Geräte wird substantiell erhöht, wenn ihre Phasenmesser mehrzielfähig sind.

So ist beispielsweise aus der WO 2004/074773 bzw. der EP 1 450 128 ein mehrzielfähiges hybrides System zur Ableitung von geodätischen Entfernungsinformationen bekannt, bei dem ein Lichtsignal auf ein oder mehrere Ziele ausgesendet wird. Dabei werden Gerätekomponenten wie Sender und Empfänger zusammen mit den Zielen als ein lineares zeitinvariantes System modelliert, das durch ein Signal angeregt und dessen Systemantwort aufgenommen wird. Im Gegensatz zu reinen Laufzeit- oder Phasenmessern wird die Entfernungsinformation sowohl aus der zeitlichen Verschiebung als auch aus der Signalform der Systemantwort abgeleitet.

In der europäischen Patentanmeldung mit der Anmeldenummer 05107764.2 wird ein mehrzielfähiges Distanzmessverfahren nach dem reinen Phasenmessprinzip mit einem zeitlich getrennten Aussenden von periodischen Signalen und einem Abtasten empfangener Signale, in dem Distanzen zu mehreren Zielen simultan bestimmt werden. Hierbei wird ein auf einem mathematischen Signalmodell basierendes statistisches Parameterschätzproblem so gelöst, dass die Zahl der Ziele für mehr als ein Ziel vorgegeben oder grundsätzlich die Zielanzahl durch das Verfahren bestimmt wird. In dieser Anmeldung wird zudem ein Ansatz zur Zerlegung der empfangenen Signale in die den jeweiligen Zielen zuordenbaren Einzelphasen beschrieben. Dieses Distanzmessverfahren ist jedoch komplex und beruht auf der Lösung eines hochdimensionalen Parameterschätz- bzw. Optimierungsproblems.

Damit stellt sich als ein wesentlicher Nachteil aller bisher bekannten Distanzmessprinzipien die technisch nicht oder nur mit grossem Aufwand, z.B. in Hybridsystemen, realisierte Mehrzielfähigkeit für Phasenmesser oder ein ungünstiges Laufzeitverhalten bzw. eine hohe Komplexität des Algorithmus heraus, wobei wiederum nur Phasenmesser die für viele Anwendungen erforderliche Genauigkeit mit vertretbarem Aufwand bereitstellen.

Die Aufgabe der vorliegenden Erfindung besteht somit in der Bereitstellung eines schnelleren bzw. vereinfachten Verfahrens zur Auflösung einer Phasenmehrdeutigkeit bzw. zur Phasenmessung.

Eine weitere Aufgabe der Erfindung besteht darin, eine solches Messverfahren bereitzustellen, das sich zudem sehr robust gegenüber Rauschen und Messfehlern in den gemessenen Phasenwerten verhält.

Eine weitere Aufgabe der Erfindung besteht darin, eine korrekte Auflösung der Phasenmehrdeutigkeit bei Mehrfachzielen zu ermöglichen, bei denen eine Zuordnung der Phasenmesswerte zu den einzelnen Zielen nicht notwendig vorgegeben ist. Hierbei soll die Auswertung insbesondere auch ein günstiges Laufzeitverhalten aufweisen.

Diese Aufgaben werden erfindungsgemäss durch die Gegenstände der Ansprüche 1 bzw. 17 oder der abhängigen Ansprüche gelöst bzw. die Lösungen fortgebildet.

Zur Distanzmessung wird eine signaltragende Strahlung erzeugt und in Richtung auf ein hinsichtlich der Distanz zu vermessendes Zielobjekt emittiert. Als signaltragende Strahlung kann beispielsweise elektromagnetische Strahlung, wie z.B. Laserlicht, Verwendung finden, aber auch für mechanische Wellen, z.B. Schallwellen, ist das erfindungsgemässe Verfahren geeignet. Die vom Zielobjekt zurückgestreute Strahlung bzw. Welle wird empfangen, elektronisch verarbeitet und ausgewertet. Dabei kann für elektromagnetische Strahlung die Wellenlänge sowohl im sichtbaren, als auch ausserhalb des sichtbaren Bereichs, z.B. im Radarbereich, liegen.

Das erfindungsgemässe Verfahren erlaubt die Bestimmung der Entfernung zu $M$ - eventuell hintereinander liegenden - Zielen, wobei $M$ nach oben grundsätzlich unbeschränkt ist, mittels auf beliebige Art bestimmten Phasenwerten $\varphi_{ij} \in [0,2\pi]$, die zu $J$ unterschiedlichen Wellenlängen $\lambda_j$, $1 \leq j \leq J$ korrespondieren und die nicht notwendig den einzelnen Zielen zugeordnet sein müssen, d.h. $\varphi_{ij}$ korrespondiert nicht zwangsläufig mit Ziel $i$, wobei $i=1..M$.

Für die Beziehung zwischen der Entfernung $R_i$ zu Ziel i mit $i=1..M$ und den Zielen richtig zugeordneten Phasenwerten $\varphi_{ij}$ gilt

$$2R_i = \frac{\varphi_{ij}}{2\pi}\lambda_j + N_{ij}\lambda_j + \varepsilon_{ij}, \quad i=1,\ldots,M \; ; \; j=1,\ldots,J \qquad (1)$$

mit unbekannten ganzzahligen Werten $N_{ij}$ und unbekannten Rauschgrössen $\varepsilon_{ij}$, die aus Messfehlern in den Phasen $\varphi_{ij}$ bzw. aus Messfehlern in den Grössen, aus denen die Phasen $\varphi_{ij}$ abgeleitet werden, resultieren. Der Faktor 2 vor $R_i$ berücksichtigt, dass das Signal einmal den Weg vom Sensor zum Ziel zurücklegt und nach Reflektion den gleichen Weg noch einmal zurück zum Sensor.

Im Folgenden wird das Verfahren rein exemplarisch für den Fall elektromagnetischer Strahlung erläutert. Hierbei wird die zu emittierende Strahlung bei oder nach der Erzeugung mit wenigstens zwei Wellenlängen $\lambda_j$ moduliert. Befindet sich das Zielobjekt ausserhalb einer Entfernung, welche die grösste der aufmodulierten Wellenlängen überschreitet, so kann aus der Messung einer einzigen Phase $\varphi$ allein keine eindeutige Distanz mehr ermittelt werden, da die absolute Phase als Distanzäquivalent so nur bis auf ein Vielfaches der Wellenlänge bestimmbar ist.

Zur Lösung dieser Phasenmehrdeutigkeit wird das mögliche bzw. zu erwartende Mehrdeutigkeitsintervall diskretisiert, indem es in Zellen einer definierten Breite aufgeteilt wird. Das Mehrdeutigkeitsintervall kann dabei einfach mit der maximal messbaren Distanz gleichgesetzt oder aber auch durch Vorabmessungen oder Schätzungen eingeschränkt werden.

Die Breite der Zellen kann beispielsweise in Abhängigkeit einer vorgegebenen Messgenauigkeit gewählt werden. Zudem wird jeder Zelle ein Zähler zugeordnet. Die algorithmische Auflösung der Phasenmehrdeutigkeit für eine gemessene Phase $\varphi_j$ erfolgt, indem der Zählerstand eines Zählers für die Zellen verändert wird, welche einer Distanz $R_N(\varphi_j) = \varphi_j/2\pi \cdot \lambda_j/2 + N \cdot \lambda_j/2$ zugeordnet sind. Im einfachsten Fall wird der Zähler jeweils um Eins inkrementiert oder auch von einem vorgegebenen Startwert dekrementiert. Die natürliche Zahl $N \in N$ beschreibt dabei die Mehrdeutigkeit der Phasenmessung, d.h. die Periodizität der Phasen, sodass schrittweise der Wert für $N$ erhöht und der Zähler der jeweils zugeordneten Zelle verändert wird. Die Distanz $R_N(\varphi_j)$ bzw. die zugeordnete Zelle repräsentieren somit eine für die jeweils gemessene Phase mögliche Distanz zum Zielobjekt bzw. die zugeordnete Absolutphase.

Dabei können sich die Phasenwerte auf beliebige periodische Signale beziehen, also insbesondere modulierte elektromagnetische Wellen, Schallwellen, Wasserwellen oder auch Reifen unterschiedlicher Durchmesser.

Der Schritt der schrittweisen Erhöhung von Zählern für alle in Frage kommenden $N \in N$ als Laufvariable für die Periodizität erfolgt für alle Phasenverschiebungen $\varphi_j$ und damit für alle Wellenlängen. Als Resultat folgt eine Verteilung der Zählerstände in den Zellen. Die Distanz zu dem wenigstens einen Zielobjekt und/oder die korrespondierende Absolutphase für eine betrachtete Wellenlänge $\lambda_j$ wird dann anhand des Maximums der Verteilung bzw. dem höchsten Zählerstand bestimmt.

Die Repräsentierung der Zellen in Form einer Datenstruktur kann in verschiedener Form geschehen. Da nur in einem Teil der Zellen ein von Null verschiedener Zählerstand generiert wird, kann neben der Datenstruktur eines Felds beispielsweise auch ein binärer Suchbaum oder eine Hash-Tabelle verwendet werden.

Soll eine gleichzeitige Distanzmessung zu mehreren Zielobjekten erfolgen, so liegt ein Mehrzielfall vor, bei dem die Zuordnung der Einzelphasen zu den Zielen unter Umständen nicht mehr gegeben ist und vom Empfänger die vermengten Einzelphasen der Reflektionen von den unterschiedlichen Zielobjekten empfangen werden, sodass aus den gemessenen Phasen als Messphase die Einzelphasen wieder extrahiert werden müssen. Eine auf dem Satz von Carathéodory basierende vektorielle Zerlegung der Messphase in die Einzelphasen gelingt beispielsweise, wenn mindestens die zweiten harmonischen Amplitudenanteile im Empfangssignal ausgewertet werden. Eine solche Einzelzielphasen-Zerlegung, wie Sie auch in der europäischen Patentanmeldung mit der Anmeldenummer 05107764.2 beschrieben ist, erlaubt die direkte Anwendung des erfindungsgemässen Verfahrens zur Auflösung von Phasenmehrdeutigkeiten.

Unabhängig davon, ob eine solche Zuordnung der Phasen zu den Zielen vorliegt oder nicht, kann das erfindungsgemässe Verfahren identisch wie im Einzielfall durchgeführt werden.

Für jede Phase $\varphi_{ij}$ erfolgt eine Inkrementierung der Zähler der einer Entfernung $R_N(\varphi_{ij})$ = $\varphi_{ij}$ / $2\pi$ · $\lambda_j$ / 2 + $N$ · $\lambda_j$ / 2 zugeordneten Zellen. Die einzelnen Phasen werden separat prozessiert. Die Entfernung zu den Zielen folgt direkt aus den grössten lokalen Maxima der Häufigkeitsverteilung.

Damit weist das erfindungsgemässe Verfahren in algorithmischer Hinsicht folgende Elemente auf

a.) eine Umrechnungsroutine, um von einem Phasenwert $\varphi_\lambda \in$ **[0,2$\pi$]**, der zu einer Wellenlänge $\lambda$ korrespondiert, auf alle möglichen dazu passenden Entfernungen $R_N$ zu schliessen

$$R_N(\varphi_\lambda) = \frac{\varphi_\lambda}{2\pi}\frac{\lambda}{2} + N\frac{\lambda}{2} \quad \mathrm{mit} \quad N = 0,1,2,...,N_{\max} \tag{2}$$

b.) eine Abbildung, die für eine vorgegebene Entfernung **R** eine Korrespondenz zu mindestens einer Speicherzelle eines Speichermoduls herstellt. Jede solche Speicherzelle korrespondiert auf diese Weise zu einem gewissen kleinen Entfernungsbereich der Grösse $\Delta R$. Die Speicherzelle möge auf diese Weise zu einem Index korrespondieren, der beispielsweise gegeben ist durch

$$\mathrm{n} = \mathrm{integer}\left(\frac{R}{\Delta R}\right) \tag{3}$$

c.) eine Routine, die den Inhalt aller Speicherzellen, die über a) und b) zu einem Phasenwert korrespondieren, inkrementiert, z.B. um mindestens 1 erhöht. Jede Speicherzelle dient damit als Zähler, der protokolliert, wie viele Phasenwerte zu dem Entfernungsbereich korrespondieren, der dieser Speicherzelle zugeordnet ist.

d.) eine Routine, die nachdem alle Phasenwerte mittels der Routine c) in beliebiger Reihenfolge verarbeitet worden sind, die $M$ Speicherzellen mit den meisten Einträgen ermittelt. Diese Speicherzellen korrespondieren jeweils zu kleinen Entfernungsbereichen, in denen sich die $M$ Ziele befinden, da diese Entfernungsbereiche mit einer maximalen Anzahl von Phasenwerten kompatibel sind. Wenn $n$ beispielsweise der einer solchen Speicherzelle zugeordnete Index ist, dann befindet sich ein Ziel in der Entfernung zwischen $n\Delta R$ und $(n+1)\Delta R$.

In einer algorithmischeren Schreibweise kann das erfindungsgemässe Verfahren dann wie folgt dargestellt werden

1. Unterteilen des Mehrdeutigkeitsintervalls in einzelne Zellen mit der Grösse des erwarteten oder akzeptablen Fehlers, wobei jede Zelle einer Entfernung zugeordnet wird.

2. Inkrementieren eines Zählers für die Zellen, welche der Distanz $R_N (\varphi_{ij})$ = $\varphi_{ij}$ /$2\pi$·$\lambda_j$ /2+$N$·$\lambda_j$ /2 zugeordnet sind, für alle relevanten $N$.

3. Wiederholen des Schrittes 2 für alle Phasen, d.h. für alle $j$ und im Mehrzielfall auch für alle $i$, wobei hier eine Zerlegung in Einzelzielphasen vorangeht.

4. Anhand der Maxima innerhalb der Verteilung von Zählerständen werden die den Zielobjekten zugeordneten Distanzen bestimmt.

Zum Grundalgorithmus existieren verschiedene Varianten.

Der Formulierung des Algorithmus mit einer Inkrementierung entsprechen erfindungsgemäss auch alternative Realisierungen, z.B. bei denen ein vorgegebener Zählerstand vermindert wird, sodass eine Suche nach Minima der Verteilung erfolgt. Als Startwert des Zählers könnte beispielsweise die Zahl der verwendeten Wellenlängen oder im Mehrzielfall das Produkt aus Zahl der Wellenlängen und Zahl der Zielobjekte angesetzt werden.

Das Verfahren kann erfindungsgemäss auch mehrstufig durchgeführt werden. So ist durch einen Grobsuchlauf mit einer Unterteilung des Mehrdeutigkeitsintervalls in nur wenige Zellen grösserer Breite eine erste Abschätzung möglich, z.B. hinsichtlich der vorhandenen Zahl von Zielobjekten. Unter Laufzeitgesichtspunkten kann so auch eine Einschränkung des zu analysierenden Distanzbereichs erfolgen. Durch eine Grobidentifikation der Zielobjekte und der Distanzbereiche, innerhalb derer sich die Zielobjekte befinden können, kann die Zahl der zu durchlaufenden Vielfachen der Wellenlängen eingeschränkt werden. In algorithmischer Hinsicht werden so für jede Wellenlänge Wertebereiche festgelegt, sodass nur die tatsächlich in Frage kommenden Absolutphasen betrachtet werden.

Anstatt den Zähler in einer zu einer Entfernung korrespondierenden Speicherzelle um 1 zu inkrementieren oder von einem bekannten Wert abzuziehen, können erfindungsgemäss auch alternative Verfahren verwendet werden, so z.B. zur Vermeidung von Quantisierungseffekten, die aus der zufälligen Verteilung der Einträge auf zwei zu benachbarten Entfernungsbereichen gehörenden Speicherzellen resultieren, wenn die Distanz zu einem Ziel genau der dazwischen liegenden Entfernung entspricht, d.h. die Entfernung fällt zwischen zwei Speicherzellen. Ein anderes Problem entsteht, wenn es bei zu klein gewählten Bereichen $\Delta R$ aufgrund von Messungenauigkeiten in den Phasenwerten $\varphi_{ij}$ nicht mehr zu einer Anhäufung der Einträge in den Speicherzellen kommt.

Für eine solche Vermeidung von Quantisierungseffekten eignen sich beispielsweise folgende Verfahren:

a.) Es können für jeden Wert von $R_N$ Einträge in 2 Datenstrukturen vorgenommen werden, bei denen die Zellen in ihrer Bedeutung um $\Delta \boldsymbol{R}/\boldsymbol{2}$ verschoben sind.

Die gesuchten Maxima, die den Entfernungen zu den Zielen entsprechen, dürfen sich auf diese Weise auch in unterschiedlichen Datenstrukturen befinden. Es werden dann bei M Zielen die grössten *M* Peaks, die zu unterschiedlichen Distanzen korrespondieren, über beide Häufigkeitstabellen hinweg ausgewählt.

b.) Statt für $R_N$ lediglich den Zähler in der Zelle $n = integer\left(\dfrac{R_N}{\Delta R}\right)$ um 1 zu erhöhen, können im Falle, dass

$$modulo\left(\frac{R_N}{\Delta R}\right) \geq 0.5$$ ist, Zähler in den Zellen *n* und *n+1* erhöht werden. Im Falle $modulo\left(\dfrac{R_N}{\Delta R}\right) < 0.5$

können entsprechend die Zähler in den Zellen *n* und *n-1* erhöht werden. Dabei wird in diesem Fall im Gegensatz zu a.) nur eine Häufigkeitstabelle eingesetzt.

c.) Es können - ohne Berücksichtigung von $modulo\left(\dfrac{R_N}{\Delta R}\right)$ - bei jedem Eintrag stets die Zähler in den Zellen *n-1*, *n* und *n+1* jeweils um 1 erhöht werden, wobei $n = integer\left(\dfrac{R_N}{\Delta R}\right)$. Dieses

Vorgehen kann direkt beim Eintragen in die Häufigkeitstabelle durchgeführt werden oder alternativ auch nachdem bereits alle Einträge in der exakten Zelle n vorgenommen wurden. Im letzteren Fall werden, wenn in einer Speicherzelle *n* der Zähler auf *q* steht, die Zähler in den Speicherzellen *n-1* und *n+1* jeweils um *q* erhöht. Mathematisch entspricht dies einer Faltung der ursprünglichen Häufigkeitsverteilung mit einer Box-Funktion der Breite 3 und Höhe 1.

d.) Statt wie bei c.) die Zähler in den Speicherzellen *n-1*, *n*, *n+1* jeweils um 1 zu erhöhen, kann die Speicherzelle *n* um einen grossen Wert, beispielsweise 2, und die Speicherzellen *n-1* und *n+1* um einen kleineren Wert, beispielsweise 1, erhöht werden. Wiederum kann dieses Vorgehen direkt beim Eintragen oder nach dem Eintragen aller Phasenwerte durchgeführt werden. Mathematisch entspricht dies einer Faltung der ursprünglichen Häufigkeitsverteilung mit einer Dreiecksfunktion der Breite 3 und maximalen Höhe 2. Alternativ kann man dies auch als 2-fache Faltung einer Box-Funktion der Breite 2 und Höhe 1 mit der ursprünglichen Häufigkeitsverteilung auffassen.

Andere Faltungen mit grösseren Faltungskernen als bei c.) und d.) sind erfindungsgemäss ebenfalls möglich, jedoch sind diese zur Lösung des Diskretisierungsproblems nicht notwendig. Grössere Faltungskerne können jedoch andere Probleme lösen, wie z.B. das Problem der mangelnden Anhäufung von Phasenwerten.

Faltungskerne grösserer Ausdehnung erlauben es, auch isolierte Einträge in der Häufigkeitstabelle aufzusammeln. Typische Faltungskerne sind Splines beliebiger Ordnung. Splines der Ordnung 1 sind gewöhnliche Box-Funktionen, Splines der Ordnung 2 Dreiecksfunktionen. Allgemein lassen sich Splines der Ordnung *n* aus Splines der Ordnung *n-1* durch Faltung mit einer Box-Funktion, d.h. einem Spline der Ordnung 1, rekursiv erzeugen. Unendlich häufiges Falten führt schliesslich zur Gauss-Kurve. Es ist im Ergebnis unerheblich, ob die Häufigkeitsverteilung gleich mit einem Spline der Ordnung *n* gefaltet wird, oder ob man eine *n*-fache Faltung mit der Boxfunktion vorzieht, wobei die direkte Faltung mit einem Spline der Ordnung *n* allerdings effizienter ist. Splines bieten einen natürlichen Zugang zu unterschiedlichen Auflösungsstufen. So kann auch mit Splines unterschiedlicher Auflösungsstufen gefaltet werden.

Der Faltungskern ist dabei mit der Messfehler-Wahrscheinlichkeitsverteilung eines Phasenwertes korreliert. Berücksichtigt man, dass im beschriebenen Ansatz die Werte zu unterschiedlichen Phasenwerten in den Speicherzellen miteinander addiert werden - anstatt sie zu multiplizieren - kann der Faltungskern (bis auf einen Faktor) als Logarithmus der Wahrscheinlichkeitsverteilung interpretiert werden.

Umgekehrt gilt, dass man - wenn man in jeder Zelle der Häufigkeitstabelle mit dem Wert 1 startet und den Faltungskern direkt als noch nicht normierte Wahrscheinlichkeitsverteilung ansieht - statt einen Zähler in einer Speicherzelle zu inkrementieren bzw. zu dekrementieren, auch den bisherigen Wert mit dem Wert des Faltungskerns - welcher dann stets grösser 1 sein sollte - multiplizieren kann.

Da das Signal/Rausch Verhältnis der Messphasen häufig bekannt ist, stehen in einem solchen Fall Konfidenzwerte $\kappa_{ij}$ für die einzelnen Messphasen zur Verfügung. Unter Berücksichtigung dieser Konfidenzwerte können die Einträge in die Häufigkeitstabelle durchgeführt werden. So kann, wenn ein Phasenwert $\varphi_{ij}$ zu einer Speicherzelle korrespondiert, der Zähler der Speicherzelle statt um 1 auch um $\kappa_{ij}$ (oder eine von $\kappa_{ij}$ abhängige Funktion) erhöht werden. Entsprechendes gilt bei Faltungskernen.

Bei der Umrechnungsroutine kann anstelle eines einzelnen Phasenwertes $\varphi \in [0,2\pi]$ auch die Kombination von $j_0 \leq J$ Phasenwerten, die zu unterschiedlichen Wellenlängen korrespondieren, betrachtet werden. In diesem Fall muss die Routine c) für alle Kombinationen des $j_0$-Tupels $(\varphi_{\lambda_1}, \varphi_{\lambda_2}, ..., \varphi_{\lambda_{j0}})$ aufgerufen werden, da nicht klar ist, ob die Phasenwerte zum gleichen Ziel korrespondieren und da keine Phasenkombination von vorneherein ausgeschlossen werden sollte. Für die Kombination von $\boldsymbol{j_0 = 2}$ Phasen bei $J$ Frequenzen und 2 Zielen müssen wegen der fehlenden Zuordnung der Phasen zu den Zielen also nicht nur die Phasenkombinationen $(\varphi_{1,\lambda_1},\varphi_{1,\lambda_2})$, $(\varphi_{1,\lambda_1},\varphi_{1,\lambda_3})$, ... $(\varphi_{1,\lambda_1},\varphi_{1,\lambda_J})$, $(\varphi_{1,\lambda_2}, \varphi_{1,\lambda_3})$, ..., $(\varphi_{1,\lambda_2}, \varphi_{1,\lambda_J})$, ... $(\varphi_{1,\lambda_{J-1}}, \varphi_{1,\lambda_J})$ und das Gleiche mit jeweils erstem Index die 2, betrachtet werden, sondern auch die Mischkombinationen zwischen Index 1 und Index 2. D.h. z.B. statt $(\varphi_{\boldsymbol{1},\lambda_1},\varphi_{\boldsymbol{1},\lambda_2})$ und $(\varphi_{\boldsymbol{2},\lambda_1}, \varphi_{\boldsymbol{2},\lambda_2})$ müssen jetzt alle 4 Kombinationen $(\varphi_{\boldsymbol{i},\lambda_1}, \varphi_{\boldsymbol{k}, \lambda_2})$ mit $\boldsymbol{i}, \boldsymbol{k} \in \boldsymbol{\{1,2\}}$ berücksichtigt werden. Zu der Kombination von $j_0 = 2$ Phasenwerten korrespondieren beispielsweise nur noch die Entfernungen, bei denen

$$\frac{\varphi_{\lambda_1}}{2\pi}\lambda_1 + N_1\lambda_1 = \frac{\varphi_{\lambda_2}}{2\pi}\lambda_2 + N_2\lambda_2 \quad \text{oder kurz } 2R_{N_1}(\varphi_{\lambda_1}) = 2R_{N_2}(\varphi_{\lambda_2})$$

gegeben ist. Diese Entfernungen lassen sich direkt über ein 2-dimensionales (im allgemeinen $j_0$-dimensionales) Phasendiagramm oder (für $\boldsymbol{j_0 = 2}$) über sogenannte Laning-Methoden erhalten. Durch Übergang zur sogenannten Widelane erhält man den Phasenwert $\varphi_\lambda = \varphi_{\lambda_2} - \varphi_{\lambda_1}$ bei der Wellenlänge $\lambda = \dfrac{\lambda_1\lambda_2}{\lambda_1 - \lambda_2}$ (Wellenlänge $\lambda = \dfrac{c}{f}$, die zur Frequenz $f = f_2 - f_1$ mit den Frequenzen $f_i = \dfrac{c}{\lambda_i}$,

($i$=1,2) gehört). Dieser Phasenwert korrespondiert zu Entfernungen $2R_N(\varphi_\lambda) = \dfrac{\varphi_\lambda}{2\pi}\lambda + N\lambda$, bzw. nach Einsetzen von $\varphi_\lambda$ und $\lambda$

$$2R_N(\varphi_{\lambda_1}, \varphi_{\lambda_2}) = \frac{\varphi_{\lambda_1} - \varphi_{\lambda_2}}{2\pi}\frac{\lambda_1\lambda_2}{\lambda_2 - \lambda_1} + N\frac{\lambda_1\lambda_2}{\lambda_2 - \lambda_1} \quad \texttt{mit} \quad N = 0,1,2,...,N_{\max} \quad (4)$$

Es gilt

$$R_N\left(\varphi_{\lambda_1},\varphi_{\lambda_2}\right)= R_{N_1}\left(\varphi_{\lambda_1}\right)= R_{N_2}\left(\varphi_{\lambda_2}\right) \text{ mit } N = N_1 - N_2 \qquad (5)$$

d.h. $R_N(\varphi_1, \varphi_2)$ für $N = N_1 - N_2$ sind die Entfernungen, für die $R_{N_1}(\varphi_{\lambda_1}) = R_{N_2}(\varphi_{\lambda_2})$ gilt. Für allgemeines $N$=0,1,2,... sind $R_N(\varphi_1, \varphi_2)$ die Entfernungen, für die $R_{N_1}(\varphi_{\lambda_1}) \approx R_{N_2}(\varphi_{\lambda_2})$ ist. $R_N(\varphi_1,\varphi_2)$ zählt somit für allgemeines $N$ die Kandidaten für $R_{N_1}(\varphi_{\lambda_1}) = R_{N_2}(\varphi_{\lambda_2})$ auf.

Die Abbildung einer Distanz R auf eine Speicherzelle in Routine b.) kann im einfachsten Fall über ein Array realisiert werden, d.h. über einen ununterbrochenen Speicherblock, bei dem Speicherzelle 1 zu Distanz 0 bis $\Delta R$ korrespondiert, Speicherzelle 2 zu $\Delta R$ bis $2\Delta R$ usw. Alternativ kann aber auch jede Art von Suchdatenstruktur verwendet werden, die bei vorgegebenem Index n = integer$\left(\dfrac{R}{\Delta R}\right)$ eine oder eventuell auch mehrere Speicherzellen anspricht.

Als Beispiele seien hier (binäre) Suchbäume (Trees), Hash-Tables, Skip-Lists und jede Art von Tries genannt. Eine nähere Beschreibung dieser Strukturen findet sich beispielsweise in Robert Sedgewick, *Algorithms in C, Parts 1-4: Fundamentals*, *Data Structures*, *Sorting*, *Searching*, Addison Wesley, 1998. Solche "Sparse"-Datenstrukturen sind insbesondere bei kleinem $\Delta R$ und begrenzten Speicherressourcen von Bedeutung. Sie erlauben es, dass kein Speicher für Entfernungen verbraucht wird, zu denen keine Phasenwerte korrespondieren. Damit kann $\Delta R$ beliebig klein gewählt werden. All diese Datenstrukturen sollen im Folgenden als Häufigkeitstabellen bezeichnet werden.

Die Bestimmung der Maxima muss nicht zwangsläufig am Ende des Eintragens aller Phasenwerte stattfinden, sondern kann auch während des Eintragens mitprotokolliert werden. Dies bietet sich insbesondere dann an, wenn für die Häufigkeitstabelle ein sehr grosses Array verwendet wird, das den Bereich von $R=0$ bis $R=R_{max}$ sehr genau, d.h. mit einem kleinen $\Delta R$, auflöst.

Insbesondere bei den oben dargestellten Methoden zur Vermeidung von Quantisierungseffekten und zur Behandlung von Messungenauigkeiten enthalten die direkt dem Maximalpeak angrenzenden Zellen eine sehr hohe Anzahl von Treffern. Um diese nicht fälschlich als Ziele zu detektieren, können annahmegemäß alle Zellen in der Umgebung eines gefundenen Peaks nicht als Ziel akzeptiert werden solange die Anzahl der Treffer monoton abnimmt.

Neben der Mehrfachauflösung bei den Faltungskernen kann auch - wie zuvor bereits angesprochen - eine Mehrfachauflösung bei der Wahl von $\Delta R$ durchgeführt werden. Hierfür wird $\Delta R$ zunächst relativ gross gewählt, sodass man im Fall der Wahl eines Arrays als Häufigkeitstabelle mit relativ geringem Speicherplatz auskommt. Sind die Entfernungen zu den Zielen auf diese Weise relativ grob, d.h. mit der Genauigkeit $\Delta R$, bestimmt, können diese Bereiche im Anschluss genauer unterteilt werden. Dies kann rekursiv immer weiter verfeinert werden. Man beachte, dass bei anfänglich zu grosser Wahl von $\Delta R$ es eventuell nicht zur Ausbildung eines eindeutigen Peaks kommt, da der Peak im Rauschen verschwindet.

Das erfindungsgemässe Verfahren kann nahezu beliebig parallelisiert werden, wofür beispielsweise folgende Ansätze zur Verfügung stehen

- Die einzelnen Phasenwerte können parallel von verschiedenen Recheneinheiten in die Häufigkeitstabelle eingetragen werden.

- Einträge in unterschiedlichen Entfernungsbereichen können von verschiedenen Recheneinheiten parallel durchgeführt werden, z.B. Recheneinheit 1 für Entfernungen zwischen 0 und 10m, Recheneinheit 2 für Entfernungen zwischen 10 und 20m, usw.

- Kombination der Verfahren a.) und b.)

- Die Detektion der Maxima in der Häufigkeitstabelle kann (weitestgehend) parallel erfolgen, indem unterschiedliche Recheneinheiten Speicherzellen zu unterschiedlichen Entfernungsbereichen analysieren.

Das erfindungsgemässe Verfahren kann auch als Vorverarbeitungsschritt zur Ermittlung von Kandidaten für die Entfernungen zu mehreren Zielen dienen. Diese dann zahlenmäßig reduzierten Kandidaten können mittels einer Bewertungsfunktion anschliessend genauer untersucht werden. Aufgrund der reduzierten Zahl von Kandidaten kann die Bewertungsfunktion wiederum aufwendiger gewählt werden, ohne dass sich das Laufzeitverhalten zu ungünstig gestaltet.

Mit dem erfindungsgemässen Verfahren können mehrere Phasenmessreihen über die Zeit ohne Abänderungen in eine gemeinsame Häufigkeitstabelle eingetragen werden. Dies bietet sich insbesondere bei stehenden Zielen und/ oder schlechtem Signal/Rausch-Verhältnis an. Sollten Messreihen zu unterschiedlichen Zeitpunkten zu Peaks bei unterschiedlichen Distanzen führen - obwohl bekannt ist, dass es sich um stehende Ziele handelt - so wird automatisch eine wahrscheinlichste Distanz ermittelt.

Das erfindungsgemässe Verfahren zur Auflösung einer Phasenmehrdeutigkeit wird nachfolgend anhand von in der Zeichnung schematisch dargestellten Ausführungsbeispielen rein beispielhaft näher beschrieben. Im einzelnen zeigen

Fig.1a-b    die Prinzipdarstellung eines Phasenmessverfahrens nach dem Stand der Technik;

Fig.2    die Prinzipdarstellung des erfindungsgemässen Verfahrens zur Auflösung einer Phasenmehrdeutigkeit für den Einzielfall;

Fig.3    die schematische Darstellung einer Entfernungsmessung für den Mehrzielfall;

Fig. 4    die schematische Darstellung der Phasen für den Mehrzielfall;

Fig.5    die Polardarstellung der Phasen für den Mehrzielfall;

Fig.6    die schematische Darstellung der Phasen für den Mehrzielfall bei Nutzung der zweiten Harmonischen;

Fig. 7    die Beziehungen bei Nutzung der zweiten Harmonischen;

Fig.8    die schematische Darstellung der vektoriellen Zerlegung in Einzelphasen für den Mehrzielfall;

Fig.9    die Prinzipdarstellung des erfindungsgemässen Verfahrens zur Auflösung einer Phasenmehrdeutigkeit für den Mehrzielfall;

Fig.10    die Gesamtdarstellung eines Beispiels des erfindungsgemässen Verfahrens für den Mehrzielfall;

Fig.11    die Ausschnittsdarstellung des Beispiels des erfindungsgemässen Verfahrens für den Mehrzielfall;

Fig.12    die Prinzipdarstellung einer Variante des erfindungsgemässen Verfahrens mit zwei gegeneinander verschobenen Zellenfolgen und

Fig.13    die Prinzipdarstellung einer Variante des erfindungsgemässen Verfahrens mit einer beispielhaften Peakidentifikation.

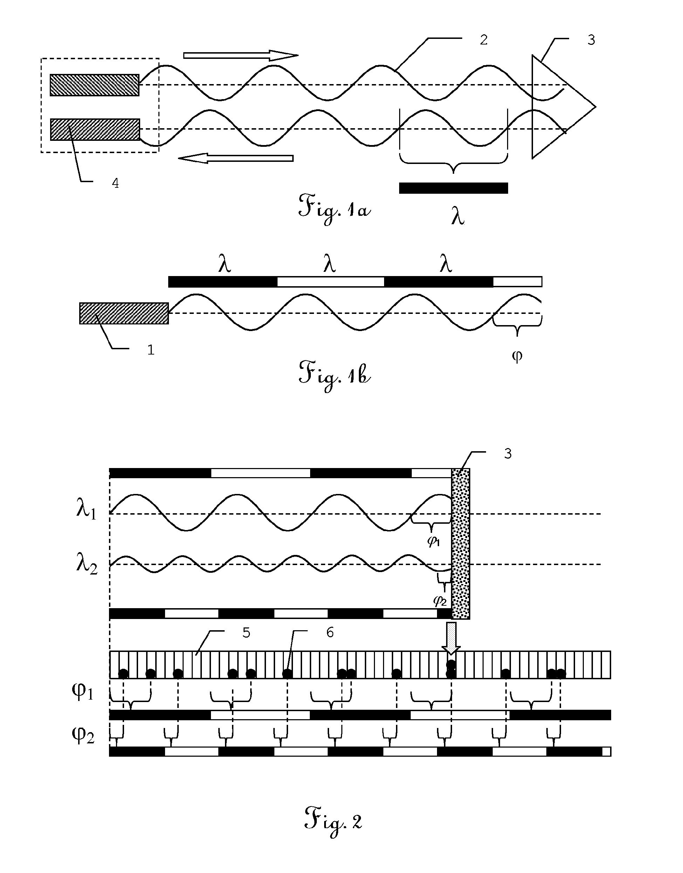

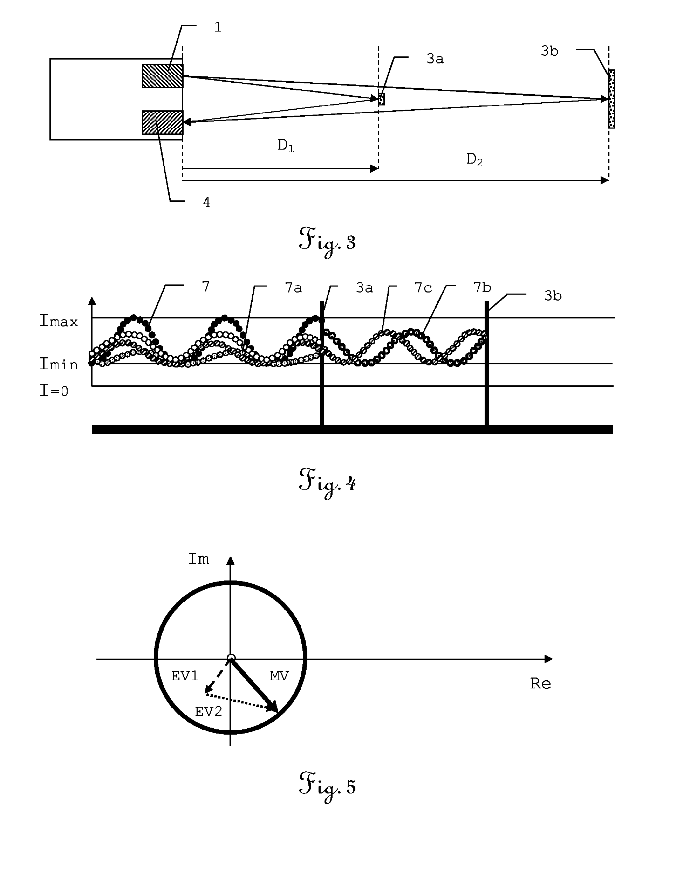

Fig.1a-b zeigen die Prinzipdarstellung eines Phasenmessverfahrens nach dem Stand der Technik bei dem die Entfernung zwischen einem Gerät und einem Ziel bestimmt wird.

In Fig.1a wird von einem Sender 1 eine Trägerwelle mit aufmoduliertem Signal, z.B. ein moduliertes Lichtsignal als Lichtwelle 2 auf ein Ziel ausgesendet, das einen Retroreflektor 3 aufweisen kann, und von dort zu einem Empfänger 4 zurück reflektiert. Im Gegensatz zum Laufzeitverfahren wird keine zeitliche Differenz zwischen Aussendung und Empfang registriert. Aufgenommen wird die Verschiebung der Phase des ein- und ausgehenden Signals.

Diese Phase $\varphi$ ist abhängig von der Entfernung zwischen Gerät und Ziel, da die Entfernung einem Vielfachen der Wellenlänge $\lambda$ der ausgesendeten Lichtwelle 2 sowie einem verbleibendem Residuum entspricht. Das Residuum stellt den bei einer Teilung der Entfernung durch die Wellenlänge $\lambda$ verbleibenden nicht-ganzzahligen Anteil dar, wie in Fig. 1b dargestellt. Die gemessene Phase $\varphi$ ist ein Mass für das Residuum, sodass bei Kenntnis dieser Phasen $\varphi$ und der Anzahl der Wellenlängen $\lambda$ die Entfernung zwischen Messgerät und Ziel abgeleitet werden kann. Da bei diesem Verfahren die Anzahl der Wellenlängen $\lambda$ als ganzzahliger Anteil nicht direkt bestimmt wird, muss eine zusätzliche Auflösung dieser Ambiguität oder Phasenmehrdeutigkeit erfolgen. Dies kann beispielsweise durch die Verwendung mehrerer - typischerweise 2 bis 8 - Modulationsfrequenzen erfolgen, für die sequentiell die absolute Phase des Empfangssignals relativ zum Sendesignal verrechnet wird. Aus der Mehrzahl dieser Messungen kann dann die Entfernung zum Zielobjekt abgeleitet werden.

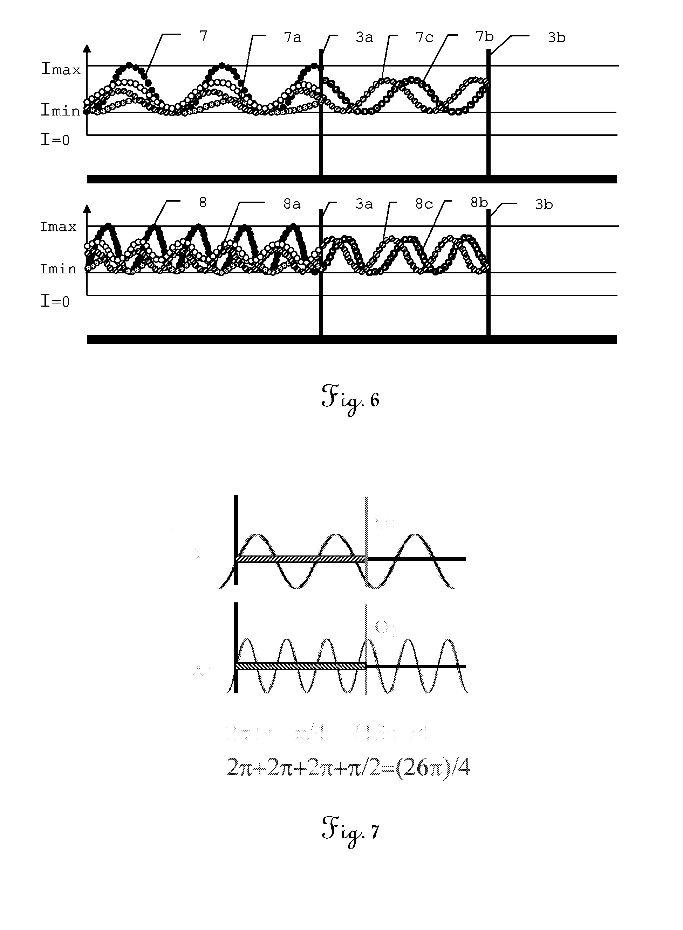

Das erfindungsgemässe Verfahren beruht auf dem Grundprinzip der klassischen Phasenmessung, weist jedoch durch die andere Auswertung der gemessenen Phasen Vorteile auf, insbesondere hinsichtlich des Laufzeitverhaltens und der Robustheit gegenüber Rauschen und Ausreissern in den gemessenen Phasenwerten. Eine Prinzipdarstellung des erfindungsgemässen Verfahrens zur Auflösung einer Phasenmehrdeutigkeit für den Einzielfall erfolgt in Fig.2.

Das erfindungsgemässe Verfahren nutzt ebenfalls die Emission von elektromagnetischer oder anderer Strahlung mit periodischem Signal, z.B. Schallwellen, und deren Reflektion durch ein Zielobjekt 3'. Dabei weist die Strahlung wenigstens zwei Wellenlängen $\lambda_1$ und $\lambda_2$ auf, für die jeweils die zugehörigen Phasen $\varphi_1$ und $\varphi_2$ gemessen werden. Das Mehrdeutigkeitsintervall, das hier durch den Distanzbereich festgelegt wird, in dem sich das Zielobjekt 3' befinden kann, wird in einzelne Zellen 5 unterteilt. Jeder Zelle 5 wird ein Zähler zugeordnet, dessen Zählerstand hier durch eine Kugel 6 veranschaulicht wird. Für den hier exemplarisch betrachteten Fall von einem Zielobjekt 3' und zwei Wellenlängen $\lambda_1$ und $\lambda_2$ erfolgt nun die Inkrementierung der Zähler, indem der durch die gemessenen Phasen $\varphi_1$ oder $\varphi_2$ repräsentierten Distanz eine Zelle zugeordnet wird, deren zugeordneter Zähler um Eins erhöht wird, was graphisch der Ablage einer Kugel 6 in der jeweiligen Zelle 5 entspricht. Zur Berücksichtigung der Mehrdeutigkeit, die eine Bestimmung der Distanz nur bis auf ein Vielfaches der Wellenlänge $\lambda_1$ oder $\lambda_2$ erlaubt, wird der Vorgang für eine wachsende Zahl von Vielfachen der Wellenlängen $\lambda_1$ und $\lambda_2$ durchgeführt. Nach Abschluss des Verfahrens für alle Wellenlängen und möglichen Vielfachen sind die Zähler einiger Zellen um einen gewissen Betrag erhöht. In diesem einfachen Fall weist der Zähler einer einzigen Zelle 5 den Wert Zwei auf, was durch zwei Kugeln 6 in dieser Zelle 5 zum Ausdruck kommt. Die dieser Zelle 5 zugeordnete Distanz stellt die wahre Zieldistanz des Zielobjektes 3' dar.

Neben statischen Anwendungen, bei denen ein unbewegtes Zielobjekt vermessen wird, kann auch eine Dynamisierung erfolgen, indem mehrere Aufteilungen des Mehrdeutigkeitsintervalls als Häufigkeitstabellen erzeugt werden. Die Häufigkeitstabellen stellen somit mehrfache Kopien einer Aufteilung dar. Hierbei wird jede Häufigkeitstabelle einem Zeitraum zugeordnet und in jedem Zeitraum werden die zeitlich zugehörigen Phasen $\varphi_j$ in die dem Zeitraum zugeordnete Häufigkeitstabelle einsortiert. Die verschiedenen Häufigkeitstabellen können dann isoliert und auch miteinander korreliert ausgewertet werden, z.B. unter Annahme einer konstanten Geschwindigkeit des Zielobjekts, welche sich in einer entsprechenden Verschiebung der Häufigkeiten bzw. Zählerstände innerhalb der zeitlich geordneten Häufigkeitstabellen bemerkbar macht.

In Fig.3 werden die Verhältnisse für eine Entfernungsmessung im Mehrzielfall schematisch dargestellt. Vom Sender 1 wird ein Signal ausgesendet, das nun an mehreren Zielen, die hier exemplarisch durch ein erstes Zielobjekt 3a in einer Zieldistanz $R_1$ und ein zweites Zielobjekt 3b in einer Zieldistanz $R_2$ verkörpert werden, eine Reflektion erfährt, die vom Empfänger 4 detektiert wird. Dabei überlagern sich die Anteile der beiden Zielobjekte 3a und 3b im Empfänger, sodass dieser nur ein einziges Signal mit einer Phase aufnimmt, das Anteile von beiden Einzelphasen aufweist.

Fig.4 zeigt die schematische Darstellung der Phasen für den Mehrzielfall. Die emittierte Strahlung 7 trifft nun auf das erste Zielobjekt 3a, von dem ein erster Strahlungsanteil 7a zurückreflektiert wird. Der restliche Teil trifft, z.B. nach Transmission im Falle eines durchlässigen ersten Zielobjekts 3a, als zweiter Strahlungsanteil 7b auf das zweite Zielobjekt 3b, das hier als undurchlässig betrachtet werden soll. Der von diesem zweiten Zielobjekt 3b zurückreflektierte dritte Strahlungsanteil 7c trifft schliesslich wieder auf den Empfänger. Dieser registriert stets die überlagerten ersten und zweiten Strahlungsanteile 7a und 7c mit einer gemeinsamen Mehrzielphase.

Die zur Fig.4 korrespondierende Polardarstellung der Phasen für den Mehrzielfall erfolgt in Fig.5. Dargestellt ist der Mehrzielvektor MV, welcher das empfangene Signal aus den überlagerten ersten und zweiten Strahlungsanteilen repräsentiert. Der Mehrzielvektor MV setzt sich dabei aus einem ersten Einzelzielvektor EV1, welcher dem ersten Strahlungsanteil entspricht, und einem zweiten Einzelzielvektor EV2, welcher dem zweiten Strahlungsanteil entspricht, zusammen. Wird der gemessene Mehrzielvektor MV in die vektoriellen Komponenten zerlegt, so können die entsprechenden Einzelzielphasen abgeleitet und das erfindungsgemässe Verfahren auch für den Mehrzielfall direkt angewendet werden. Man beachte, dass beliebig viele Zerlegungen in Einzelzielvektoren EV1 & EV2 existieren, die den gemessenen Mehrzielvektor MV erzeugen.

Eine solche eindeutige Zerlegung ist beispielsweise möglich, wenn höhere harmonische Anteile beim Signalempfang und der Signalauswertung mitberücksichtigt werden. Fig.6 stellt die Phasen für den Mehrzielfall bei Nutzung der zweiten Harmonischen schematisch dar. Für eine entsprechend der zweiten Harmonischen mit doppelter Frequenz emittierte Strahlung 8 gelten nun ähnliche Bedingungen. Die höherharmonische Strahlung 8 trifft ebenfalls auf das erste Zielobjekt 3a, von dem ein erster höherharmonischer Strahlungsanteil 8a zurückreflektiert wird. Der restliche Teil erreicht als zweiter höherharmonischer Strahlungsanteil 8b das zweite Zielobjekt 3b. Der von diesem zweiten Zielobjekt 3b zurückreflektierte dritte höherharmonische Strahlungsanteil 8c trifft schliesslich wieder auf den Empfänger. Dieser registriert ebenfalls die überlagerten ersten und zweiten höherharmonischen Strahlungsanteile 8a und 8c mit einer gemeinsamen höherharmonischen Mehrzielphase.

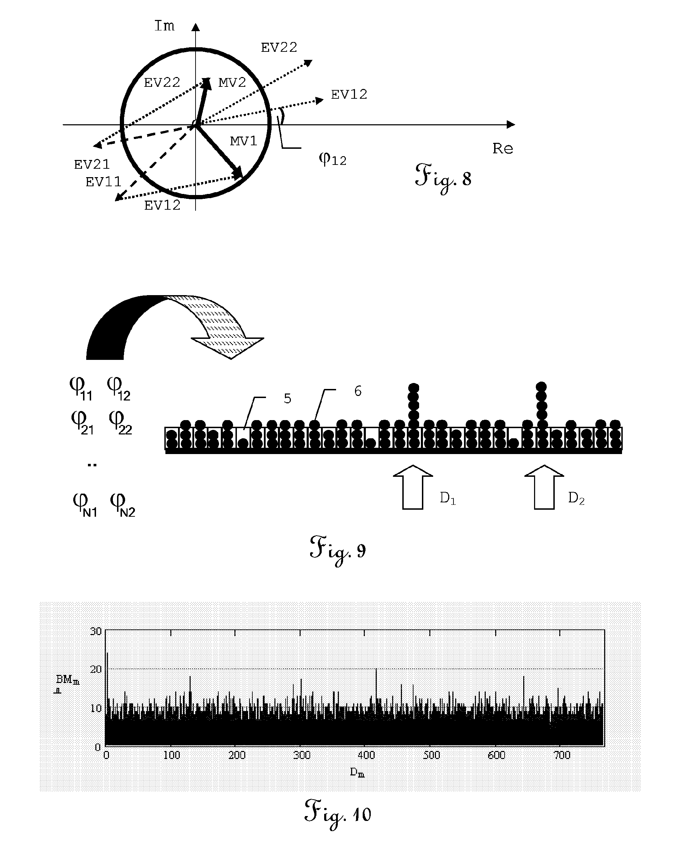

Fig.7 zeigt die Beziehungen bei Nutzung der zweiten Harmonischen für eine spezielle Distanz des Zielobjekts. Da die Wellenlänge der zweiten Harmonischen halbiert ist, verdoppelt sich deren Absolutphase. Die Kenntnis dieser Phasenbeziehung erlaubt eine Zerlegung in die Einzelzielphasen, die in Fig.8 in der Polardarstellung schematisch erläutert ist. Gemäss dem Satz von Carathéodory existiert eine eindeutige Zerlegung des Mehrzielvektors, wenn eine weitere Information, z.B. durch die zweite Harmonische, vorliegt, sodass eine Zerlegung und Ableitung der zugehörigen Einzelzielphasen möglich ist. Der Mehrzielvektor MV1 wird in die Einzelzielvektoren EV11 und EV12 bzw. der Mehrzielvektor MV2 in die Einzelzielvektoren EV21 und EV22 zerlegt. Aus Kenntnis eines Einzelzielvektors kann dann die zugehörige Phase abgeleitet werden, wie hier exemplarisch für den Einzelzielvektor EV12 und die Einzelzielphasen $\varphi_{12}$

dargestellt.

In Fig.9 erfolgt die Prinzipdarstellung des erfindungsgemässen Verfahrens zur Auflösung einer Phasenmehrdeutigkeit für den Mehrzielfall. Für jede der Einzelzielphasen $\varphi_{ij}$ wird der Schritt des Inkrementierens der Zähler durchgeführt, sodass schliesslich eine Verteilung von Zählerständen folgt, aus der die wahren Zieldistanzen $R_1$ und $R_2$ abgeleitet werden können, was in diesem Beispiel durch Identifikation der beiden höchsten Zählerstände erfolgt. Auch im Mehrzielfall kann die für Fig.2 beschriebene Dynamisierung des Verfahrens für bewegte Zielobjekte erfolgen.

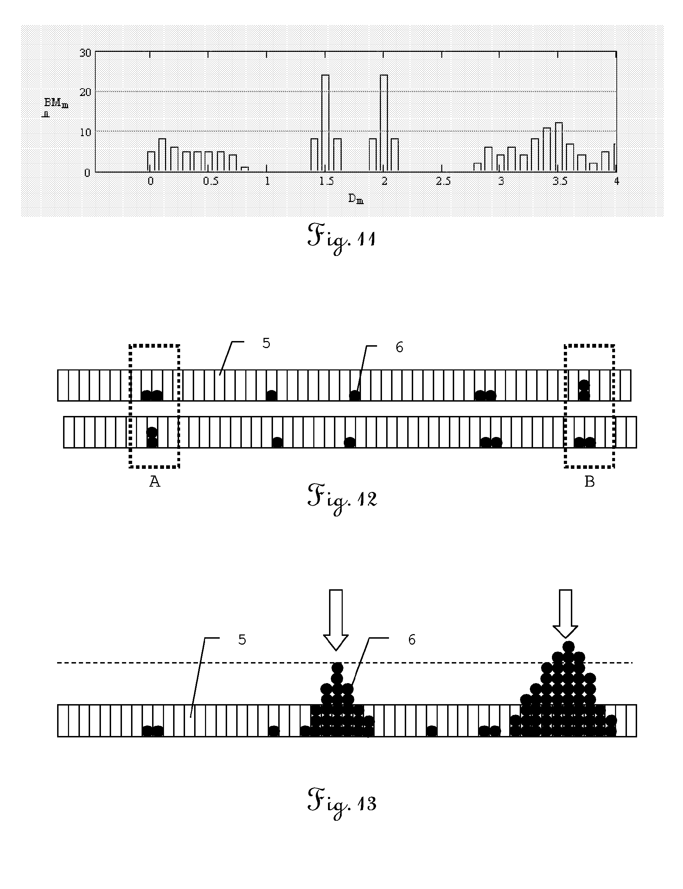

Ein Beispiel des erfindungsgemässen Verfahrens für den Mehrzielfall wird in Fig.10 und Fig.11 gezeigt, wobei Fig.10 die Gesamtdarstellung des Mehrdeutigkeitsintervalls und Fig.11 eine Ausschnittsdarstellung umfassen. In diesem Beispiel sind zwei Zielobjekte in den Entfernungen von 1,5 und 2 Meter vom Entfernungsmesser entfernt angeordnet. Das Mehrdeutigkeitsintervall beträgt 768 Meter. Die Messung erfolgt mit 8 Frequenzen, wobei die Zellen eine Breite von 0,1 Metern aufweisen und mit der Gewichtung 1/3/1 aufgefüllt werden, d.h. der Zähler einer Zelle, die der Distanz $R_N(\varphi_{ij}) = \varphi_{ij} / 2\pi \cdot \lambda_j / 2 + N \cdot \lambda_j / 2$ entspricht, wird um Drei, die der daneben liegenden Zellen jeweils um Eins inkrementiert. Die Einzelzielphasen werden ohne Sortierung nach Zugehörigkeit direkt verarbeitet. Die maximalen Zählerstände betragen in diesem Beispiel 24 und sind in Fig.10 ganz am linken Rand zu erkennen. Die Ausschnittsdarstellung in Fig. 11 zeigt die beiden Peaks in der Mitte der Abbildung. Den beiden Zellen mit den höchsten Zählerständen sind die korrekten Distanzen 1,5 und 2 Meter zugeordnet.

In Fig.12 erfolgt die Prinzipdarstellung einer Variante des erfindungsgemässen Verfahrens mit zwei gegeneinander verschobenen Zellenfolgen zur Vermeidung bzw. Auflösung von Quantisierungsfehlern. Das Inkrementieren des Zählerstands erfolgt hier parallel auch für eine weitere Aufteilung des Mehrdeutigkeitsintervalls, die hinsichtlich einer Zuordnung zur Distanz um eine halbe Breite der Zelle 5 verschoben ist. Durch diesen Ansatz können beispielsweise Peaks besser identifiziert werden, die aufgrund einer ungünstigen Unterteilung und Zuordnung auf mehrere Zellen 5 aufgeteilt werden. Dieses Problem wird in den Zonen A und B verdeutlicht, in denen jeweils für eine Zellenfolge ein Peak entsteht, der in der verschobenen Zellenfolge lediglich als Auffüllung von zwei benachbarten Zellen 5 in Erscheinung tritt.

Fig.13 zeigt die Prinzipdarstellung einer anderen Variante des erfindungsgemässen Verfahrens mit einer beispielhaften Peakidentifikation. Aufgrund von Quantisierungseffekten und Messungenauigkeiten enthalten die direkt dem Maximalpeak angrenzenden Zellen 5 eine sehr hohe Anzahl von Treffern, die hier wiederum als eine Anzahl von Kugeln 6 dargestellt werden. Eine reine Orientierung an den Zellen 5 mit den höchsten Zählerständen würde in diesem Beispiel für den rechten Peak insgesamt drei Zellen identifizieren, die über dem höchsten Zählerstand des linken Peaks liegen. Ordnet man diese drei Zellen nur aufgrund ihrer Zählerstände jeweils drei Zielen zu, so ergibt sich mit den drei direkt aneinandergrenzenden Zielidentifikationen eine falsche Lösung, die zudem nicht eindeutig ist, da für die zu identifizierenden zwei Ziele drei Zellen in Frage kommen. Um diese falsche Lösung zu vermeiden, können ansatzgemäß alle Zellen 5 in der Umgebung eines gefundenen Peaks nicht als Ziel akzeptiert werden solange die Anzahl der Treffer monoton abnimmt. Somit werden die direkt an den höchsten Zählerstand angrenzenden Werte unterdrückt und die dem linken Peak zugeordnete Zelle 5 mit dem höchsten Zählerstand wird als zum zweiten Ziel zugehörig identifiziert. Das Verfahren beginnt somit beim höchsten Zählerstand und sucht den nächsthöheren Zählerstand, wobei es alle Zählerstände innerhalb des monoton abnehmenden Bereichs um das absolute Maximum unterdrückt. Mit der Identifikation des nächsten Peaks würden im Dreizielfall auch dort alle Zählerstände innerhalb des Monotoniebereichs unterdrückt und schliesslich die Zelle 5 mit dem dritthöchsten Zählerstand ausserhalb der ausgeschlossenen Bereiche als dritte Zielentfernung gefunden.

**Patentansprüche**

1. Verfahren zur Auflösung von Phasenmehrdeutigkeiten mit wenigstens

   • einem Aussenden eines periodischen Signals (2,7), insbesondere als Licht- oder Schallwelle, auf wenigstens ein innerhalb eines Mehrdeutigkeitsintervalls befindliches Zielobjekt (3,3',3a,3b), wobei das Signal (2) wenigstens $J \geq 2$, insbesondere aufmodulierte, Wellenlängen $\lambda_j$ mit $1 \leq j \leq J$ aufweist,
   • einem Empfangen des vom Zielobjekt (3,3',3a,3b) reflektierten Signals (7a,7c) und
   • einem Ableiten der Phasen $\varphi_j$ als Phasenverschiebung für jede der Wellenlängen $\lambda_j$ aus dem empfangenen Signal;

   **gekennzeichnet durch**

   - ein Aufteilen des Mehrdeutigkeitsintervalls in Zellen (5) definierter Breite, wobei jeder Zelle (5) ein Zählerstand und eine Distanz zugeordnet wird, wobei eine Zählerstandverteilung ableitbar ist,
   - ein Inkrementieren des Zählerstands für die Zellen (5), welche der möglichen Zieldistanz $R_N(\varphi_j) = \varphi_j / 2\pi \cdot \lambda_j$

/ **2 + N** · λ$_j$ / **2** zugeordnet sind, wobei das Inkrementieren für dem Mehrdeutigkeitsintervall zuordenbare $N \in N$ als Periodizitätslaufvariable, insbesondere für alle dem Mehrdeutigkeitsintervall zuordenbare $N \in N$, und für alle Phasen φ$_j$ erfolgt,
- einem Bestimmen einer Absolutphase für wenigstens eine Wellenlänge λ$_j$ und/oder einer wahren Zieldistanz zu dem wenigstens einen Zielobjekt (3,3',3a,3b).

2. Verfahren nach Anspruch 1,
   **dadurch gekennzeichnet, dass**
   für die einem jeweiligen $N \in N$ und einer jeweiligen Phase φ$_j$ zugeordneten möglichen Zieldistanz $R_N(φ_j) = φ_j$ / **2**π · λ$_j$ / **2 + N** · λ$_j$ / **2** ein Inkrementieren des Zählerstands für mehr als eine Zelle (5) erfolgt, insbesondere unter Verwendung einer Gewichtsfunktion.

3. Verfahren nach Anspruch 1 oder 2,
   **dadurch gekennzeichnet, dass**
   das Inkrementieren des Zählerstands für die Zellen (5) erfolgt, welche Kombinationen eines T-Tupels aus Phasen φ$_j$ mit $T \leq J$ zugeordnet sind, insbesondere für die Zweier-Tupel mit $T = 2$ und einem Inkrementieren des Zählerstands

   für die $\dfrac{\varphi_{j_1}}{2\pi}\lambda_{j_1} + N_{j_1}\lambda_{j_1} \approx \dfrac{\varphi_{j_2}}{2\pi}\lambda_{j_2} + N_{j_2}\lambda_{j_2}$ zugeordneten Zellen (5), wobei $j_1 \neq j_2$ und $j_1, j_2 \leq J$.

4. Verfahren nach einem der vorangehenden Ansprüche,
   **dadurch gekennzeichnet, dass**
   das Inkrementieren des Zählerstands unter Verwendung einer Laning-Methode erfolgt.

5. Verfahren nach einem der vorangehenden Ansprüche,
   **dadurch gekennzeichnet, dass**
   das Bestimmen der Absolutphase und/oder der wahren Zieldistanz durch Identifikation des höchsten Zählerstands erfolgt.

6. Verfahren nach Anspruch 5,
   **dadurch gekennzeichnet, dass**
   einer oder mehrere der aktuell höchsten Zählerstände fortlaufend protokolliert wird.

7. Verfahren nach einem der vorangehenden Ansprüche,
   **dadurch gekennzeichnet, dass**
   für wenigstens eine der Phasen φ$_j$ eine vektorielle Zerlegung in $i \geq 2$ Zielobjekten (3,3',3a,3b) zugeordnete Einzelzielphasen φ$_{ij}$ erfolgt, wobei das Inkrementieren für alle der Phasen φ$_j$ zugeordneten Einzelzielphasen φ$_{ij}$ mit $R_N(φ_{ij}) = φ_{ij}$ / $2π·λ_j/2+N·λ_j/2$ erfolgt.

8. Verfahren nach Anspruch 7,
   **dadurch gekennzeichnet, dass**
   das Bestimmen der Absolutphasen und/oder der wahren Zieldistanzen zu den $M \geq 2$ Zielobjekten (3,3',3a,3b) anhand einer Auswertung der Zählerstandverteilung erfolgt, insbesondere durch die Identifikation von den Zielobjekten (3,3',3a,3b) zuordenbaren Maxima.

9. Verfahren nach einem der vorangehenden Ansprüche,
   **dadurch gekennzeichnet, dass**
   ein Grobsuchlauf zur Bestimmung von Parametern erfolgt, insbesondere zur Optimierung der Wahl der Breite der Zellen (5).

10. Verfahren nach einem der vorangehenden Ansprüche,
    **dadurch gekennzeichnet, dass**
    die Breite der Zellen (5) in Abhängigkeit einer vorgegebenen Messgenauigkeit und/oder mit einer Mehrfachauflösung gewählt wird.

11. Verfahren nach einem der vorangehenden Ansprüche, **dadurch gekennzeichnet, dass**
    das Inkrementieren des Zählerstands auch für eine weitere Aufteilung des Mehrdeutigkeitsintervalls erfolgt, insbesondere für eine um hinsichtlich einer Zuordnung zur Distanz um eine halbe Breite der Zelle (5) verschobene Aufteilung.

12. Verfahren nach einem der vorangehenden Ansprüche,
    **dadurch gekennzeichnet, dass**
    die Zählerstandverteilung nach oder während des Inkrementierens mit einem Faltungskern, gegebenenfalls mehrfach, gefaltet wird, insbesondere mit Splines der Ordnung 1 oder 2.

13. Verfahren nach einem der vorangehenden Ansprüche,
    **dadurch gekennzeichnet, dass**
    das Inkrementieren unter Berücksichtigung von Konfidenzwerten für die Phasen $\varphi_j$ oder die Einzelzielphasen $\varphi_{ij}$ erfolgt, insbesondere unter Berücksichtigung eines Signal-Rausch-Verhältnisses für die jeweiligen Phasen $\varphi_j$ oder die Einzelzielphasen $\varphi_{ij}$.

14. Verfahren nach einem der vorangehenden Ansprüche,
    **dadurch gekennzeichnet, dass**
    beim Aufteilen des Mehrdeutigkeitsintervalls mehrere Aufteilungen in Zellen (5) definierter Breite als Häufigkeitstabellen erzeugt werden, wobei jede Häufigkeitstabelle einem Zeitraum zugeordnet wird und in jedem Zeitraum die zugehörigen Phasen $\varphi_j$ oder Einzelzielphasen $\varphi_{ij}$ in die dem Zeitraum zugeordnete Häufigkeitstabelle einsortiert werden.

15. Computerprogrammprodukt mit Programmcode, der auf einem maschinenlesbaren Träger gespeichert oder durch eine elektromagnetische Welle verkörpert ist, zur Durchführung des Verfahrens nach einem der Ansprüche 1 bis 14, insbesondere wenn das Programm in einem Computer ausgeführt wird.

16. Computerprogrammprodukt nach Anspruch 15,
    **dadurch gekennzeichnet, dass**
    eine Gesamtheit der Zellen (5) durch eine Häufigkeitstabelle repräsentiert ist, insbesondere durch eine der folgenden Datenstrukturen

    - Feld,
    - binärer Suchbaum,
    - Hash-Tabelle,
    - Skip-Listen,
    - Tries.

17. Distanzmesser mit

    o wenigstens einer Signalquelle (1) zur Erzeugung und Aussendung eines periodischen Signals (2,7), insbesondere einer Laserquelle, wobei das Signal (2,7) wenigstens $J\geq2$, insbesondere aufmodulierte, Wellenlängen $\lambda_j$ mit $1 \leq j \leq J$ aufweist;
    o einem Empfänger (4) zum Empfangen eines reflektierten Signals (7a,7c) und zur Ableitung einer Phase $\varphi_j$ für jede der Wellenlängen $\lambda_j$ aus dem empfangenen Signal; und
    o einer Auswerteelektronik zur Auflösung von Phasenmehrdeutigkeiten;
    **dadurch gekennzeichnet, dass**
    die Auswertelektronik eine zur Durchführung des Verfahrens nach einem der Ansprüche 1 bis 14 ausgebildete Schaltlogik mit parallelisierter Datenverarbeitung aufweist, insbesondere einen anwendungsspezifischen integrierten Schaltkreis.

Fig. 1a

Fig. 1b

Fig. 2

Fig. 3

Fig. 4

Fig. 5

Fig. 6

$$2\pi+\pi+\pi/4 = (13\pi)/4$$
$$2\pi+2\pi+2\pi+\pi/2=(26\pi)/4$$

Fig. 7

Fig. 8

Fig. 9

Fig. 10

Fig. 11

Fig. 12

Fig. 13

**Europäisches Patentamt**

## EUROPÄISCHER RECHERCHENBERICHT

Nummer der Anmeldung

EP 05 11 1695

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 537 502 A (MILLER ET AL) 27. August 1985 (1985-08-27) | 1,2,5,6, 10,15-17 | INV. G01S17/36 |
| Y | * Spalte 1, Zeile 54 - Spalte 2, Zeile 62; Abbildungen 1,2 * | 9 | G01S13/38 |
| A | * Spalte 3, Zeile 14 - Spalte 9, Zeile 9 * ----- | 7,14 | |
| Y | US 3 652 161 A (DIETER ROSS) 28. März 1972 (1972-03-28) * Zusammenfassung; Abbildungen 1,2 * * Spalte 4, Zeile 55 - Zeile 60 * ----- | 9 | |
| A | US 4 768 877 A (TORREGROSA ET AL) 6. September 1988 (1988-09-06) * Zusammenfassung; Abbildungen 1,2 * * Spalte 2, Zeile 21 - Zeile 54 * ----- | 1 | |
| A,D | EP 1 450 128 A (LEICA GEOSYSTEMS AG) 25. August 2004 (2004-08-25) * das ganze Dokument * ----- | 1-17 | |
| A,D | MUSCH T ET AL: "A multiple target high precision laser range measurement system based on the FMCW concept" MICROWAVE CONFERENCE, 2003. 33RD EUROPEAN 7-9 OCT. 2003, PISCATAWAY, NJ, USA,IEEE, Bd. 3, 7. Oktober 2003 (2003-10-07), Seiten 991-994, XP010680818 ISBN: 1-58053-835-5 * das ganze Dokument * ----- | 1-17 | RECHERCHIERTE SACHGEBIETE (IPC) G01S |

Der vorliegende Recherchenbericht wurde für alle Patentansprüche erstellt

| Recherchenort | Abschlußdatum der Recherche | Prüfer |
|---|---|---|
| München | 15. Mai 2006 | Mercier, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**EP 1 793 243 A1**

**ANHANG ZUM EUROPÄISCHEN RECHERCHENBERICHT
ÜBER DIE EUROPÄISCHE PATENTANMELDUNG NR.**

EP 05 11 1695

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-05-2006

| Im Recherchenbericht angeführtes Patentdokument | | Datum der Veröffentlichung | Mitglied(er) der Patentfamilie | | Datum der Veröffentlichung |
|---|---|---|---|---|---|
| US 4537502 | A | 27-08-1985 | KEINE | | |
| US 3652161 | A | 28-03-1972 | CH | 488196 A | 31-03-1970 |
| | | | DE | 1623564 B1 | 26-08-1971 |
| | | | FR | 1593402 A | 25-05-1970 |
| | | | GB | 1235905 A | 16-06-1971 |
| US 4768877 | A | 06-09-1988 | DE | 3673874 D1 | 11-10-1990 |
| | | | EP | 0204613 A1 | 10-12-1986 |
| | | | FR | 2582825 A1 | 05-12-1986 |
| | | | JP | 62129772 A | 12-06-1987 |
| EP 1450128 | A | 25-08-2004 | AU | 2004213528 A1 | 02-09-2004 |
| | | | CA | 2516478 A1 | 02-09-2004 |
| | | | WO | 2004074773 A1 | 02-09-2004 |

EPO FORM P0461

Für nähere Einzelheiten zu diesem Anhang : siehe Amtsblatt des Europäischen Patentamts, Nr.12/82

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004074773 A
- EP 1450128 A
- EP 05107764 A

**In der Beschreibung aufgeführte Nicht-Patentliteratur**

- **J. M. RÜEGER.** Electronic Distance Measurement. Springer, 1996
- **R. JOECKEL ; M. STOBER.** Elektronische Entfernungs- und Richtungsmessung. Verlag Konrad Wittwer, 1999